# EUROPEAN PATENT SPECIFICATION

(11) **EP 1 081 920 B1**
(45) Date of publication and mention of the grant of the patent: **15.11.2006**
(21) Application number: 00118519.8
(22) Date of filing: 25.08.2000
(51) Int. Cl.: H04L 29/06, H04M 7/00, H04L 12/28

(54) **Method of establishing communication exchange between a terminal of a packet-based network and a terminal connected to a remote access server**
Verfahren zum Kommunikationssitzungsaufbau zwischen einem Endgerät eines paketbasierten Netzwerks und einem Endgerät verbunden mit einem Fernzugriffsserver
Procédé d' établissement d' une session de communication entre un terminal d' un réseau à commutation de paquets et un terminal connecté à un serveur d' accès à distance

(30) Priority: 06.09.1999 KR 3765099
(43) Date of publication of application: 07.03.2001
(73) Proprietor: SAMSUNG ELECTRONICS CO. LTD., Kyungki-do, Seoul (KR)
(72) Inventor: Ryu, Yeon-Seung, Seoul (KR)
(74) Representative: Grünecker, Kinkeldey, Stockmair & Schwanhäusser Anwaltssozietät

(56) References cited:
- EP-A- 0 781 015
- EP-A- 0 818 908
- WO-A-99/35805
- TOGA J ET AL: "ITU-T standardization activities for interactive multimedia communications on packet-based networks: H.323 and related recommendations" COMPUTER NETWORKS, ELSEVIER SCIENCE PUBLISHERS B.V., AMSTERDAM, NL, vol. 31, no. 3, 11 February 1999 (1999-02-11), pages 205-223, XP004304599 ISSN: 1389-1286

## Description

The present invention relates to a method of establishing communication exchange between a terminal of an IP (Internet Protocol) network and a terminal connected through PPP (Point to Point Protocol) to a remote access server, and more particularly a communication protocol between a gatekeeper and a remote access server.

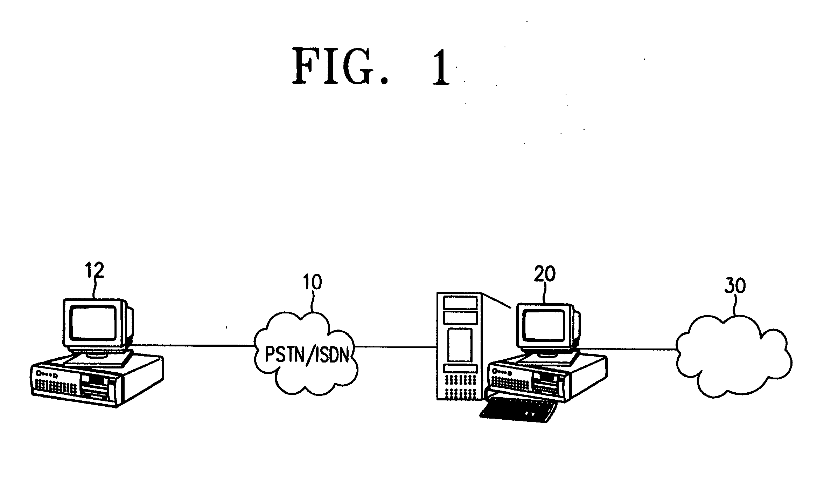

Fig. 1 illustrates a network structure for enabling a terminal C 12 connected with PSTN (Public Switched Telephone Network) or ISDN (Integrated Service Digital Network) 10 to access an IP network through dial-up connection to a remote access server 20. In this case, the terminal C 12 makes a PPP connection with the remote access server 20, assigned with an IP address, so that it may exchange packet data with a particular host through the IP network 30.

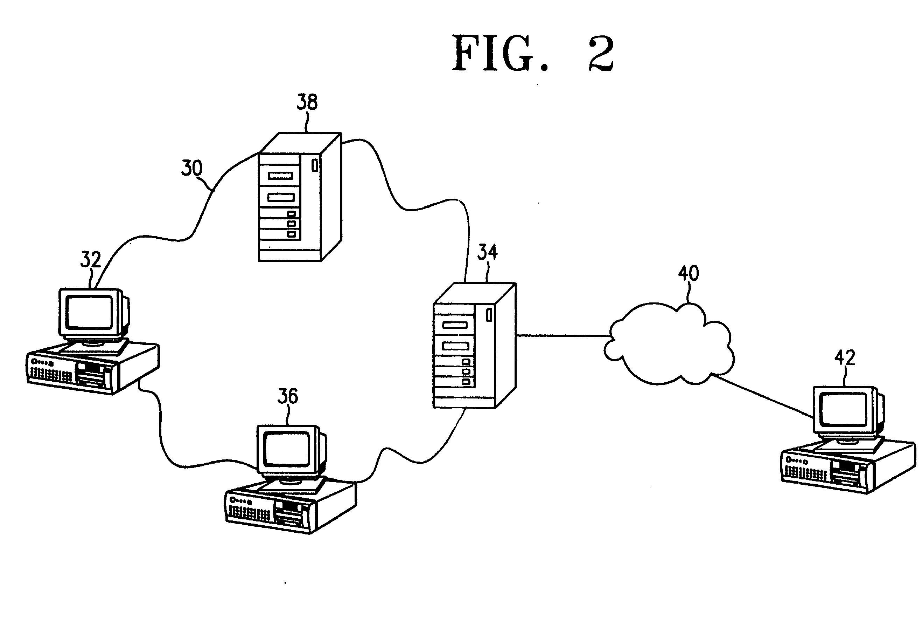

Fig. 2 is a network structure as recommended by ITU-T (International Telecommunication Union-Telecommunication Standardization Sector) in H.323 (Packet-based Multimedia Communications System). The ITU-T H.323 provides a standard for enabling the H.323 terminals to make multimedia communication with each other in a packet-based network such as IP network, defining the entities of gatekeeper 38, terminal 32, 36, gateway 34, and MCU (Multipoint Control Unit, not shown), and a communication protocol between these entities. According to this protocol, the terminals should register their aliases and IP addresses in the gatekeeper 38, and receive admission from it for making communication with each other. The protocol used for this consists of RAS (Registration, Admission, and Status) and Q.931 of ITU-T H.225.0 (Line Transmission of Non-Telephone Signals).

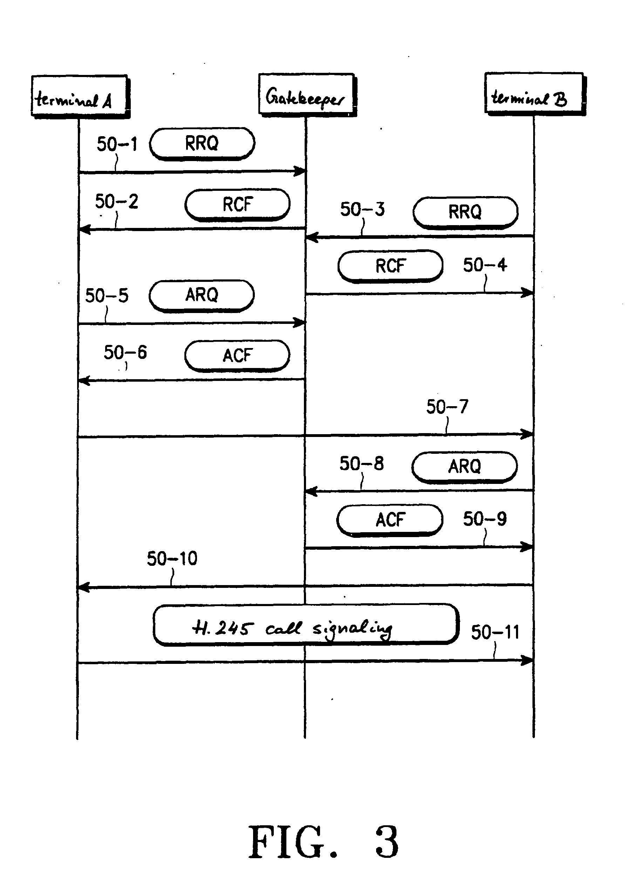

Fig. 3 is a flow diagram for illustrating the process of exchanging messages to enable a terminal A to make a connection to a terminal B in the H.323 network. Firstly, the terminals send RRQ (Registration Request) messages to the gatekeeper to register their aliases (a kind of telephone number) and IP addresses in steps 50-1 and 50-3, and then receive RCF (Registration Confirm) messages in steps 50-2 and 50-4, so that they may communicate with each other through the IP addresses retrieved from the gatekeeper according to the aliases. Simultaneously with retrieving the IP address of the receiving terminal, the sending terminal exchanges ARQ (Admission Request) message and ACF (Admission Confirm) message with the gatekeeper respectively in steps 50-5 and 50-6 in order to receive the admission for communication. Receiving the ACF message from the gatekeeper, the sending terminal A sends in step 50-7 Q931 setup message for call signaling to the receiving terminal B, as shown in Fig. 3. Then, the receiving terminal B likewise exchanges ARQ message and ACF message with the gatekeeper respectively in steps 50-8 and 50-9 in order to receive the admission for communication. Receiving the ACF message from the gatekeeper, the receiving terminal B sends in step 50-10 Q931 connection message to the sending terminal A, performing H.245 call signaling to establish communication in step 50-11.

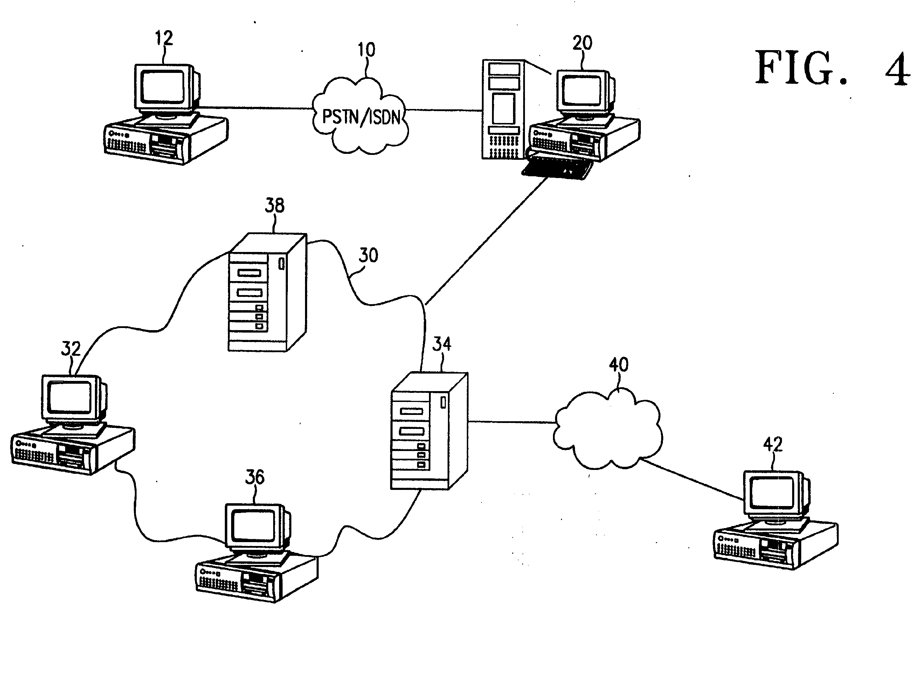

Referring to Fig. 4 for illustrating the structure of a combined network comprising the networks of Figs. 1 and 2, the terminal C 12 accesses the remote access server 20 to communicate with a particular H.232 terminal such as terminal A 32 or B 36 connected with the IP network 30. Of course, connected to the IP network 30, the terminal C 12 should register its alias and IP address in the gatekeeper 38, and then receive the admission for communication.

Thus, while the terminal C 12 maintains such dial-up connection with the remote access server 20 with the help of a mode, the terminals on the IP network 30 may communicate with the terminal C 12 at any time. However, the terminal C 12 usually maintains off-line from the remote access server 20 due to the cost of dial-up modem connection when it does not require communication with the IP network 30. Terminating dial-up connection with the remote access server 20, the terminal C 12 loses its IP address, and its registered information in the gatekeeper 38 becomes ineffective, so that the terminals on the IP network cannot connect with the terminal C in a circuit network such as PSTN.

An article published in Computer Networks, Elsevier Science Publishers B.v., Amsterdam, NI (11-02-1999), Vol 31(3), pp 205-223 relates to the H.323 standard and describes the types and functions of H.323 terminals and other H.323 devices as well as their interactions.

EP-A-0781015 discloses a computer network telephone system. It is further described that terminals in computer networks are connected via servers to transmit data containing at least audio data through the computer networks. When a source terminal makes a call to a destination terminal, the server of the computer network calls up the destination terminal and establishes connection between the server of the computer network and the destination terminal.

It is the object of the present invention to provide an improved method for enabling a first terminal on an IP network to communicate with a second terminal accessing a remote access server even when the second terminal terminates the dial-up connection with the remote access server.

This object is solved by the subject matter of the independent claim.

Preferred embodiments are defined by the dependent claims.

According to an aspect of the present invention, a method for enabling a first terminal on a packet-based network to communicate with a second terminal accessing a remote access server, comprises the steps of registering the aliases and IP (Internet Protocol) addresses of the first terminal and remote access server into the gatekeeper, letting the first terminal send to the gatekeeper a message for requesting a connection with the second terminal, causing the gatekeeper to request the remote access server to connect with the second terminal even not registered in the gatekeeper, causing the remote access server to request the second terminal to register its alias and IP address in the gatekeeper, and establishing communication between the first and second terminals through the gatekeeper.

The present invention will now be described more specifically with reference to the drawings attached only by way of example.
Fig. 1 is a diagram for illustrating the structure of a communication network for a terminal connected to PSTN or ISDN to make a dial-up connection with an IP network through a remote access server;
Fig. 2 is diagram for illustrating a communication network recommended in H.323 of ITU-T;
Fig. 3 is a flow diagram for illustrating the flowing of messages between terminals in an H.323 network;
Fig. 4 is the combined network comprising the networks of Figs. 1 and 2; and
Fig. 5 is a flow diagram for illustrating the process of connecting a terminal on an IP network and a terminal accessing a remote access server according to the present invention.

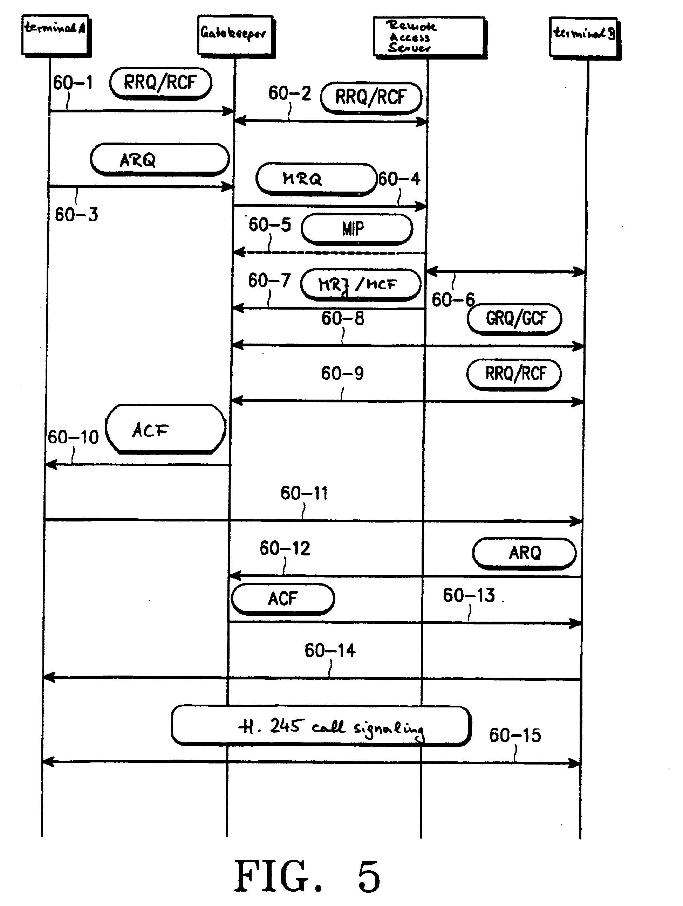

The present invention provides a communication protocol between the gatekeeper and the remote access server according to a message flow as shown in Fig. 5, where the message syntax and data structure comply with ASN.1 (Abstract Syntax Notation No.1) as shown in Table 1.

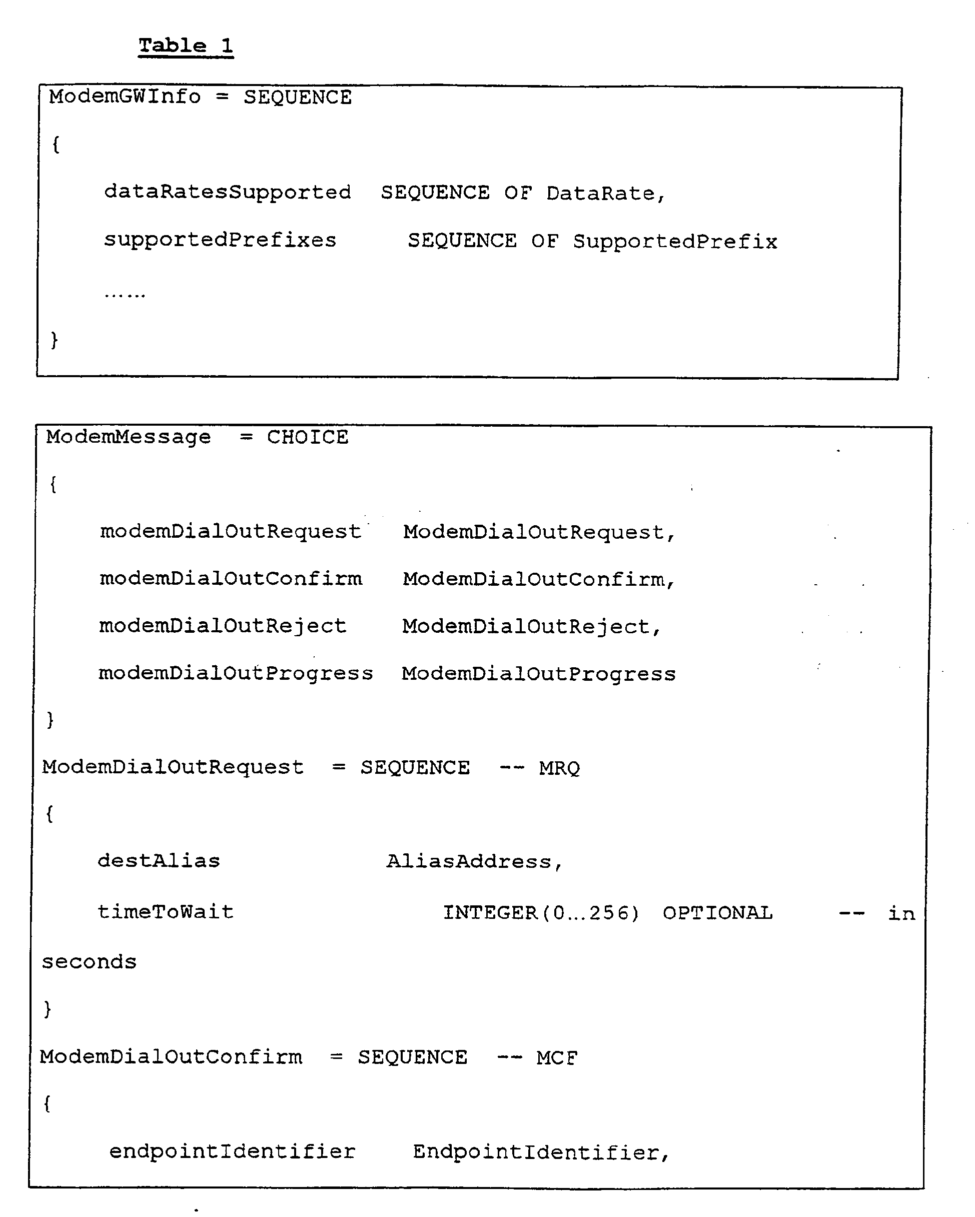

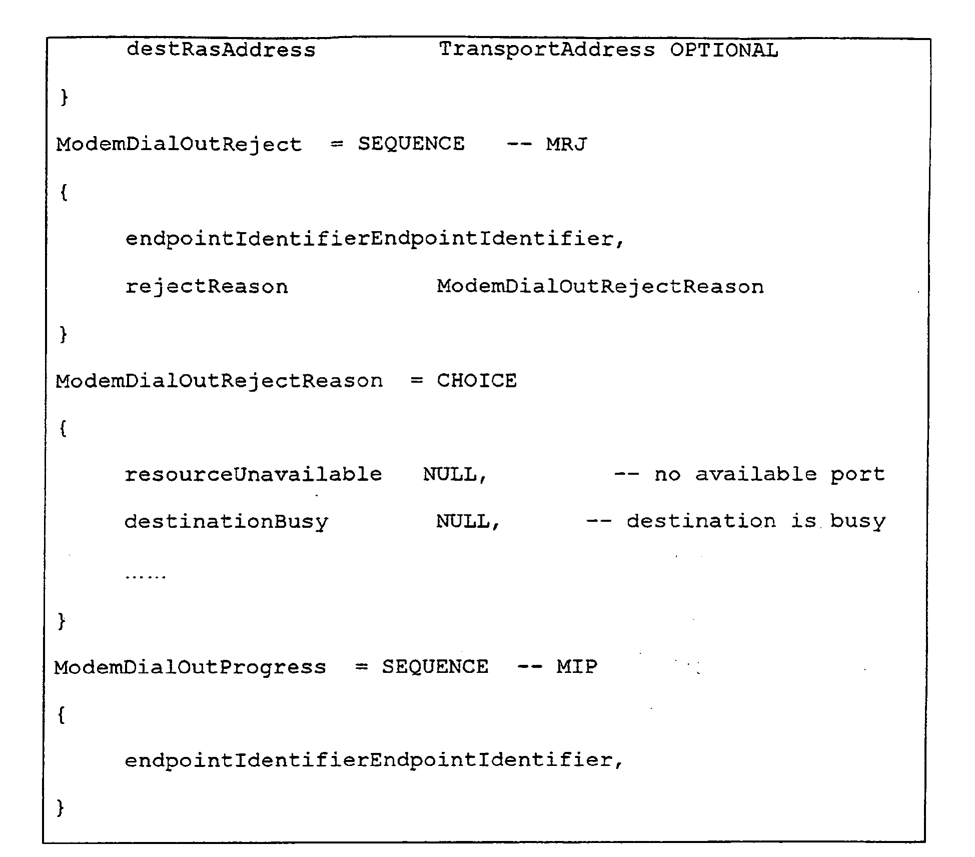

The terminology used in Table 1 complies with ITU-T H.323 and H.225.0 Ver. 2, except for MRQ (ModemDialOut Request), MCF (ModemDialOut Confirm), MRJ (ModemDialOut Reject) and MIP (ModemDialOut in Progress), which have been proposed by the present invention, exchanged by using "nonStandardData" of "NonStandardMessage" of H.225.0 RAS. In addition, there has been proposed a data structure defined by "modemGWInfo" used in "terminalType" in the conventional RRQ message.

MRQ is a message sent by the gatekeeper to the remote access server when the gatekeeper receives ARQ from a first terminal requesting a connection with a second terminal not registered in the gatekeeper but to be connected through the remote access server. The MRQ message contains the telephone number "destAlias" of the second terminal, and the time limit "timeToWait" for waiting a response to the MRQ message.

MCF is a message for notifying the gatekeeper that the remote access server has made a PPP connection with the second terminal and assigned an IP address thereto in response to the MRQ message. The assigned IP address may be included in "destRasAddress".

MRJ is a message for notifying the gatekeeper that the remote access server cannot make a connection with the second terminal in response to the MRQ message. The reject reason is included in "rejectReason".

MIP is a message for notifying the gatekeeper that the remote access server is in progress for making a connection with the second terminal when it cannot send a message responding to MRQ until "timeToWait".

Referring to Fig. 5, the terminal A on the IP network and remote access server send RRQ messages to register their aliases and IP addresses respectively in steps 60-1 and 60-2. In this case, the remote access server designates "terminalType" for the gateway in the RRQ message. The gateway is defined by a data structure "GatewayInfo", whose "nonStandardData" is used for notifying its information. The "nonStandardData" is defined by a structure "nonStandardParameter" consisting of "nonStandardIdentifier" and data. The "nonStandardIdentifier is defined by a structure "NonStandardIdentifier" consisting of object or "h221NonStandard". The object is used to designate the object identifier of the remote access server. The data of "NonStandardParameter" employs a structure "ModemGWInfo" as shown in Table 1. The other fields of the RRQ message are the same as in the other terminals.

Thereafter, if the gatekeeper sends RCF message for notifying the terminal A and remote access server of the registration completed respectively in steps 60-1 and 60-2, the terminal A sends ARQ message to the gatekeeper in order to communicate with the terminal B, in step 60-3. Detecting the alias of the terminal B contained in the ARQ message, the gatekeeper sends in step 60-4 MRQ message to the remote access server, so that the remote access server attempts to make a dial-up PPP connection with the terminal B in step 60-6. In this case, if there is no available port or the terminal B is busy, the remote access server sends MRJ message to the gatekeeper in step 60-7. As the remote access server attempts to make the PPP connection with the terminal B, it sends MIP message to the gatekeeper at the time interval specified in the MRQ message in step 60-5. Accomplishing the PPP connection with assigning the IP address, the remote access server sends MCF message to the gatekeeper in 60-7.

Subsequently, while the gatekeeper waits registration of the terminal B, the terminal B sends GRQ (Gatekeeper Request) message to seek the gatekeeper for registration. Receiving GCF (Gatekeeper Confirm) from the gatekeeper in step 60-8, the terminal B sends RRQ message to the gatekeeper to register the alias and IP address. Then, the gatekeeper sends RCF message to confirm the registration of the terminal B in step 60-9.

Then, the gatekeeper sends ACF to the terminal A to admit the communication in step 60-10. The subsequent message flow complies with the specification of H.323. Namely, as shown in Fig. 5, if the terminal A, receiving the ACF message, sends Q931 setup message for call signaling to the terminal B in step 60-11, the terminal B sends ARQ message to the gatekeeper for receiving admission of communication in step 60-12. Receiving ACF message from the gatekeeper in step 60-13, the terminal B sends Q931 connection message to the terminal A in step 60-14. Finally, performing H.245 call signaling, the communication is established in step 60-15. The termination of the communication is as defined in the specification of H.323.

Thus, the invention provides means for enabling the H.323 terminal on the IP network to establish as desired communication with a terminal on PSTN or ISDN that is not presently connected with the remote access server, by exchanging controlling messages between the gatekeeper and remote access server. In addition, the inventive method employs the conventional H.225.0 RAS message according to the international standard, thereby providing compatibility with the conventional communication system. Moreover, a terminal on PSTN or ISDN may be called by a terminal on the IP network even in off-line with the remote access server, and therefore, saves the cost taken for maintaining on-line with the remote access server.

## Claims

1. A method for enabling a first terminal to communicate via a remote access server with a second terminal, said first terminal and said remote access server communicating with each other by means of a packet-based network and said second terminal accessing said remote access server, the method comprising the steps of:
registering (60-1, 60-2) the aliases and IP addresses of said first terminal and remote access server into a gatekeeper;
sending (60-3) a message from said first terminal to said gatekeeper for requesting a connection with said second terminal;
causing said gatekeeper to request (60-4) said remote access server to connect with said second terminal even not registered in said gatekeeper;
said remote access server sending (60-5, 60-7) a message to said gatekeeper for notifying said gatekeeper that
(a) the remote access server cannot make a connection with the second terminal; or
(b) the remote access server has made a connection with the second terminal and assigned an IP address thereto; or
(c) the remote access server is in progress for making a connection with the second terminal;
in case a connection between said remote access server and said second terminal is accomplished, causing said remote access server to request (60-6) said second terminal to register (60-8) its alias and IP address in said gatekeeper; and
establishing (60-11 - 60-15) communication between said first and second terminals through said gatekeeper.

2. The method according to Claim 1, wherein requesting said remote access server to connect with said second terminal comprises sending a message containing the phone number of said second terminal and a response time limit to said remote access server.

3. The method according to Claim 1 or 2, wherein the step of said remote access server requesting said second terminal to register comprises the steps of said remote access server attempting to connect with said second terminal, notifying said gatekeeper of no available port or said second terminal being busy, notifying said gatekeeper of the IP address assigned to said second terminal connected, letting said second terminal register its alias and IP address in said gatekeeper, and causing said gatekeeper to admit the registration of said second terminal.

## Patentansprüche

1. Ein Verfahren für das Befähigen eines ersten Terminals, über einen Remote Access Server mit einem zweiten Terminal zu kommunizieren, besagtes erstes Terminal und besagter Remote Access Server kommunizieren miteinander mittels eines paketbasierten Netzwerkes und besagtes zweites Terminal greift auf besagten Remote Access Server zu, beinhaltend die Schritte:
Registrieren (60-1, 60-2) der Aliase und IP-Adressen von besagten ersten Terminal und Remote Access Server in einem Gatekeeper;
Senden (60-3) einer Nachricht von besagtem ersten Terminal zu besagtem Gatekeeper zum Anfordern einer Verbindung mit besagtem zweiten Terminal;
Bewirken, dass besagter Gatekeeper anfordert (60-4), dass besagter Remote Access Server sich mit besagtem zweiten Terminal verbindet, selbst wenn dieses nicht in besagtem Gatekeeper registriert ist;
Senden einer Nachricht durch besagten Remote Access Server (60-5, 60-7) zu besagtem Gatekeeper für das Benachrichtigen des besagten Gatekeepers, dass
(a) der Remote Access Server keine Verbindung mit dem zweiten Terminal herstellen kann; oder
(b) der Remote Access Server eine Verbindung mit dem zweiten Terminal hergestellt hat und eine IP-Adresse zugewiesen hat; oder
(c) der Remote Access Server dabei ist, eine Verbindung mit dem zweiten Terminal herzustellen;
In dem Fall, dass eine Verbindung zwischen besagtem Remote Access Server und besagtem zweiten Terminal hergestellt ist, Bewirken, dass besagter Remote Access Server anfordert (60-6), dass besagtes zweites Terminal seinen Alias und IP-Adresse in besagtem Gatekeeper registriert (60-8); und
Aufbauen (60-11 bis 60-15) einer Kommunikation zwischen besagten ersten und zweiten Terminals durch besagten Gatekeeper.

2. Das Verfahren gemäß Anspruch 1, wobei das Anfordern, dass sich besagter Remote Access Server mit dem zweiten Terminal verbindet, das Senden einer Nachricht, welche die Telefonnummer des besagten zweiten Terminals und einen Antwortzeitgrenzwert zu besagtem Remote Access Server beinhaltet, beinhaltet.

3. Das Verfahren gemäß der Ansprüche 1 oder 2, wobei der Schritt, dass besagter Remote Access Server anfordert, dass besagtes zweites Terminal sich registriert, die Schritte beinhaltet: besagter Remote Access Server versucht sich mit dem zweiten Terminal zu verbinden, Benachrichtigen des besagten Gatekeepers, dass kein Port verfügbar oder dass besagtes zweites Terminal beschäftigt ist, Benachrichtigen des Gatekeepers über die IP-Adresse, die dem zweiten Terminal, welches verbunden ist, zugewiesen ist, Zulassen, dass besagtes zweites Terminal seinen Alias und IP-Adresse in besagtem Gatekeeper registriert, und Veranlassen, dass besagter Gatekeeper die Registrierung des besagten zweiten Terminals zulässt.

## Revendications

1. Procédé destiné à permettre à un premier terminal de communiquer, via un serveur d'accès distant, avec un second terminal, ledit premier terminal et ledit serveur d'accès distant communiquant l'un avec l'autre par un réseau de type paquets et ledit second terminal accédant audit serveur d'accès distant, le procédé comprenant les étapes consistant à :
enregistrer (60-1, 60-2) les dénominations et les adresses IP dudit premier terminal et dudit serveur d'accès distant auprès d'un contrôleur d'accès ;
envoyer (60-3) un message entre ledit premier terminal et ledit contrôleur d'accès pour demander une connexion avec ledit second terminal ;
ordonner audit contrôleur d'accès de demander (60-4) audit serveur d'accès distant la connexion avec ledit second terminal, même s'il n'est pas enregistré dans ledit contrôleur d'accès ;
ledit serveur d'accès distant envoyant (60-5, 60-7) un message audit contrôleur d'accès afin d'informer ledit contrôleur d'accès que
(a) le serveur d'accès distant ne peut pas établir une connexion avec le second terminal ; ou
(b) le serveur d'accès distant a établi une connexion avec le second terminal et lui a attribué une adresse IP ; ou
(c) le serveur d'accès distant est en cours d'établissement d'une connexion avec le second terminal ;
au cas où une connexion entre ledit serveur d'accès distant et ledit second terminal est établie, ordonner audit serveur d'accès distant de demander (60-6) audit second terminal d'enregistrer (60-8) sa dénomination et son adresse IP auprès dudit contrôleur d'accès ; et
établir la communication (60-11 à 60-15) entre ledit premier et ledit second terminal, via le contrôleur d'accès.

2. Procédé selon la revendication 1, dans lequel l'étape consistant à demander audit serveur d'accès distant de se connecter audit second terminal comprend l'émission vers ledit serveur d'accès distant d'un message contenant le numéro de téléphone dudit second terminal et un délai limite de réponse.

3. Procédé selon la revendication 1 ou 2, dans lequel l'étape où ledit serveur d'accès distant demande audit second terminal se s'enregistrer, comprend les étapes consistant pour le serveur d'accès distant à tenter de se connecter audit second terminal, indiquer audit contrôleur d'accès qu'il n'y a pas de port disponible ou que ledit second terminal est occupé, indiquer audit contrôleur d'accès l'adresse IP attribuée audit second terminal connecté, ordonner audit second terminal d'enregistrer sa dénomination et son adresse IP auprès dudit contrôleur d'accès et faire admettre audit contrôleur d'accès l'enregistrement dudit second terminal.
